# FASCICULE DE BREVET EUROPEEN

(11) **EP 2 766 802 B1**
(45) Date de publication et mention de la délivrance du brevet: **21.03.2018**
(21) Numéro de dépôt: 12770147.2
(22) Date de dépôt: 11.10.2012
(51) Int. Cl.: G06F 3/048, G06F 1/16, G06F 3/14, G06F 3/0488

(54) **DISPOSITIF ADAPTÉ POUR LA MISE EN OEUVRE D'UN SYSTÈME DE SUPERVISION ET DE CONTRÔLE**
VORRICHTUNG ZUR IMPLEMENTIERUNG EINES SUPERVISIONS-UND ÜBERWACHUNGSSYSTEMS
DEVICE SUITABLE FOR IMPLEMENTING A SUPERVISION AND MONITORING SYSTEM

(30) Priorité: 14.10.2011 FR 1103158
(43) Date de publication de la demande: 20.08.2014
(73) Titulaire: THALES, 92200 Neuilly-sur-Seine (FR)
(72) Inventeur: LAOUBI, Alexandre, F-78141 Velizy -Villacoublay Cedex (FR); LE RUYET, Jean-Yves, F-83140 Six-Fours-les-Plages (FR)
(74) Mandataire: Lavoix
(86) Numéro de dépôt international: PCT/EP2012/070199
(87) Numéro de publication internationale: WO 2013/053847

(56) Documents cités:
- EP-A1- 2 309 368
- US-A1- 2004 049 743
- US-B1- 6 545 669

## Description

La présente invention concerne un dispositif adapté pour la mise en oeuvre d'un système de supervision et de contrôle.

L'invention se situe de manière plus générale dans le domaine des interfaces homme-machine pour des systèmes de supervision et contrôle à grande échelle, qui trouvent des applications dans de nombreux domaines, comme par exemple la surveillance de sécurité de sites sensibles, des aéroports, quartiers sécurisés, la surveillance de systèmes de transports (e.g. réseau ferroviaire, réseau de transport électrique), la supervision de sites de production industriels.

Dans ces domaines, un grand nombre de capteurs de divers types, comme par exemple des caméras vidéo, ou des capteurs de température ou de pression pour un site de production industrielle, sont mis en oeuvre dans un périmètre. Ces capteurs fournissent des informations relatives à un ensemble de points sensibles d'un périmètre de à superviser. Dans un tel système de supervision à grande échelle, des centaines, voire des milliers de capteurs sont mis en oeuvre, fournissant de très grandes quantités d'information. Un opérateur en charge de la supervision et du contrôle reçoit une très grande quantité d'informations et se retrouve confronté à des situations complexes.

Typiquement, les capteurs fournissent des informations relatives à l'état courant d'un périmètre à superviser, qui est, la plupart du temps, un état dit « normal » de fonctionnement. La supervision a pour but la détection d'incidents, par exemple une intrusion dans un endroit non autorisé, ou un échauffement d'une machine au-delà des valeurs nominales sur un site de production industrielle.

De manière classique, les informations fournies par des capteurs sont recueillies et traitées par des logiciels, par exemple comparées à des valeurs seuil dans le cas simple de surveillance de la température, ou bien par mise en oeuvre d'un logiciel de traitement de vidéo pour la détection d'intrusion, pour fournir à un opérateur des alarmes et des incidents. L'opérateur a alors la possibilité de prendre en charge le traitement des alarmes via une interface logicielle. Dans certains cas, le traitement d'une alarme se fait via des commandes logicielles qui sont, le cas échéant, traduites en commandes de pilotage à distance des capteurs ou d'autres ressources mises en oeuvre dans le système de surveillance, comme par exemple l'orientation d'un capteur qui est une caméra pour une prise de vue selon une orientation particulière ou bien une coupure de courant dans une section du périmètre de surveillance dans le cas d'incident sur un site de production.

Ainsi, un tel système de supervision et de contrôle met en oeuvre un ensemble d'équipements matériels dont des capteurs de surveillance, des moyens logiciels de traitement des informations fournies par les capteurs, des moyens logiciels de commande à distance d'au moins certaines des ressources, des moyens d'obtention de commandes fournies par un opérateur, des moyens d'affichage.

Il apparaît clairement que de tels systèmes de supervision et de contrôle sont très complexes, surtout pour la supervision à grande échelle.

Les systèmes existants présentent en général l'ensemble de fonctions logicielles disponibles à l'opérateur, dans un souci d'exhaustivité. Cependant, cela risque d'induire une forte charge cognitive d'un opérateur et une gestion des alarmes et des incidents plus lente en cas de crise.

Le brevet US6919864 décrit un moniteur d'ordinateur comportant plusieurs écrans, un écran principal et un ou plusieurs écrans auxiliaires liés physiquement et électriquement à l'écran principal de manière à présenter un espace d'affichage plus étendu. L'opérateur manipule les objets affichés sur les écrans par l'intermédiaire de moyens classiques (souris, commande clavier). Ce moniteur améliore l'ergonomie pour un affichage simultané de multiples informations, mais ne facilite pas la gestion des alarmes et des incidents par un opérateur dans un système de supervision.

La demande de brevet US2004/049743 A1 décrit un dispositif universel, comportant deux écrans, pour la visualisation et le contrôle de diverses applications logicielles, les contrôles pouvant être effectués de manière tactile.

Il existe un besoin de fournir à un opérateur, dans le cadre d'un système de supervision et de contrôle, un ensemble d'interfaces de visualisation et de commande qui soit ergonomique, qui permette une mise en oeuvre simple, rapide et efficace pour la gestion des alarmes et incidents.

A cet effet, l'invention propose un dispositif adapté pour la mise en oeuvre d'un système de supervision et de contrôle d'un périmètre conforme à la revendication 1.

Avantageusement, le dispositif de l'invention est particulièrement adapté à la mise en oeuvre de systèmes de supervision et de contrôle à grande échelle, dans la mesure où le premier écran, destiné exclusivement à la visualisation et non à l'interaction, permet de conserver de manière constante une vue d'ensemble du périmètre à superviser et/ou des informations de supervision attenantes, le deuxième écran de visualisation et d'interaction permettant, via des commandes tactiles qui sont très faciles et rapides à mettre en oeuvre, un contrôle rapide et efficace du système, et en particulier des alarmes et incidents. En particulier, l'opérateur est apte à agir rapidement par des traitements logiciels adaptés, comme par exemple demandes d'informations détaillées, contrôle des capteurs, en cas d'alarmes signalées dans une fenêtre d'affichage du premier écran.

Le dispositif selon l'invention peut présenter une ou plusieurs des caractéristiques ci-dessous :
- les objets graphiques de liaison sont positionnés dans un espace de liaison situé à proximité du bord du deuxième écran le plus proche d'un bord du premier écran ;
- ladite commande tactile prédéterminée est une commande de glissement d'un dit objet graphique de liaison vers un bord du deuxième écran qui est situé à l'opposé du bord du deuxième à proximité duquel est positionné ledit espace de liaison ;
- le dispositif comporte des moyens d'affichage, dans ladite au moins une fenêtre d'interaction, lorsque ladite fenêtre d'affichage du premier écran associée est une fenêtre d'affichage de supervision, d'un ensemble d'informations enrichi par rapport aux informations affichées dans ladite fenêtre d'affichage de supervision du premier écran associée ;
- ledit ensemble d'informations enrichi est un ensemble d'informations contextuel, sélectionné en fonction d'au moins une valeur associée à une information de supervision ;
- le dispositif comporte des moyens de récupérer une commande tactile prédéterminée effectuée par un opérateur en un point de ladite fenêtre d'interaction et des moyens de commander un ou plusieurs capteurs dudit système de supervision et de contrôle en fonction de ladite commande ;
- le deuxième écran comporte en outre des moyens d'affichage d'au moins une fenêtre d'affichage et d'interaction, et des moyens de récupération de commande tactile dans lesdites fenêtres d'affichage et d'interaction, permettant l'affichage détaillé de zones faisant partie dudit périmètre sélectionnées par l'opérateur ;
- le dispositif comporte des moyens d'indication en superposition sur ladite fenêtre d'affichage global du premier écran de la zone dans ladite zone d'affichage et d'interaction du deuxième écran ;
- le dispositif comporte des moyens de récupération d'une commande opérateur consistant à déplacer une fenêtre d'affichage et d'interaction affichée sur le deuxième écran vers ledit espace de liaison, et des moyens d'affichage d'une fenêtre d'affichage correspondante à un endroit prédéterminé dudit premier écran, et
- le premier écran est apte à être positionné sensiblement verticalement et le deuxième écran est apte à être positionné sensiblement horizontalement sur un plan de travail de l'opérateur.

D'autres caractéristiques et avantages de l'invention ressortiront de la description qui en est donnée ci-dessous, à titre indicatif et nullement limitatif, en référence aux figures annexées, parmi lesquelles :
- la figure 1 est une vue schématique globale d'une utilisation d'un dispositif adapté à la mise en oeuvre d'un système de supervision et de contrôle selon l'invention,
- la figure 2 est un schéma représentant les blocs fonctionnels d'un dispositif selon l'invention,
- la figure 3 est un exemple d'interfaces de visualisation et de commande selon un mode de réalisation de l'invention,
- les figures 4, 5 et 6 illustrent un exemple de gestion d'alarmes via les interfaces de visualisation et de commande selon l'invention, et
- les figures 7 et 8 illustrent un exemple d'affichage d'informations dans un exemple d'utilisation d'une interface de visualisation et de commande selon l'invention.

L'invention sera décrite plus particulièrement dans un mode de réalisation où le système de supervision et de contrôle est un système de type vidéosurveillance, appliqué à un grand périmètre à surveiller, par exemple un quartier d'une ville. Les capteurs mis en oeuvre sont typiquement des caméras.

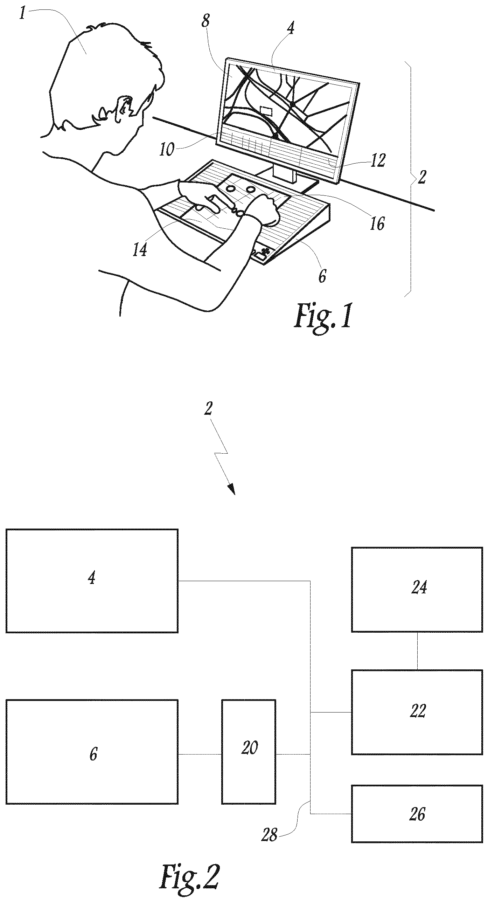

La figure 1 représente schématiquement un scénario d'utilisation de l'invention. Un opérateur humain 1 travaille sur un dispositif 2 selon l'invention, qui est un poste de travail, comportant notamment un premier écran 4 qui est un écran de visualisation uniquement, c'est-à-dire qu'il n'est pas prévu de moyen permettant à l'opérateur d'interagir directement avec les données affichées sur ce premier écran, et un deuxième écran 6 qui est un écran tactile multipoints, permettant à la fois la visualisation et l'interaction avec l'opérateur via des commandes tactiles transmises par l'opérateur.

De manière classique, chaque écran est connecté à une unité centrale de traitement, non représentée dans cette figure, qui est configurée pour exécuter des instructions, effectuer des affichages sur chacun des écrans.

Dans le mode de réalisation illustré ici, le premier écran de visualisation 4 est positionné verticalement, alors que le deuxième écran d'interaction 6 est positionné horizontalement, posé sur un plan de travail non représenté, de manière analogue au clavier dans un dispositif de type station de travail classique. Ce positionnement est particulièrement avantageux d'un point de vue ergonomique, l'opérateur ayant les moyens de saisie de commande, c'est-à-dire l'écran de visualisation et d'interaction 6, au plus près de lui, et en particulier de ses mains, ce qui lui permet d'agir très rapidement en cas d'incident signalé dans le périmètre à surveiller.

De préférence, le deuxième écran de visualisation et d'interaction 6 est positionné de manière légèrement inclinée, selon un plan montant vers le premier écran de visualisation, l'angle d'inclinaison étant faible de l'ordre de 10 à 20 degrés permettant ainsi d'augmenter encore plus l'ergonomie de positionnement de l'utilisateur.

Selon une variante, le premier écran 4, le deuxième écran 6 et l'unité de traitement sont intégrés en un seul bloc, à la manière d'un ordinateur portable.

Le premier écran 4 comprend un ensemble de fenêtres d'affichage, notamment une première fenêtre 8 dédiée à l'affichage d'une vue schématique globale du périmètre à superviser dans son ensemble. Cette vue est également appelée vue synthétique, en ce qu'elle présente, selon les besoins de l'application de supervision et de contrôle mise en oeuvre, une vision d'ensemble simplifiée. Par exemple, dans le cadre de la vidéosurveillance d'un grand périmètre, un plan schématique du périmètre à surveiller, sur lequel sont superposées, en quelques points d'importance, des informations rafraîchies en temps réel et issues des capteurs de surveillance. Par exemple des indicateurs graphiques synthétiques de l'état des équipements, de secteurs géographiques impactés par une panne, des alarmes. Les points d'importance sont soit sélectionnés automatiquement par un traitement logiciel des données recueillies des capteurs, soit identifiés par une configuration préalable du système.

Le premier écran 4 comporte également une partie 10 en bas, comportant au moins une fenêtre d'affichage de supervision 12, apte à afficher des informations de supervision synthétiques, par exemple relatives à l'état d'ensemble des capteurs, des listes d'incidents, des synthèses d'alarmes.

Le deuxième écran 6, qui est l'écran d'interaction, est un écran tactile multipoints, qui comporte une zone d'affichage de détails 14 et des zones activables 16 par toucher de l'opérateur. De préférence, l'opérateur agit directement par commande tactile en touchant les zones activables affichant des informations ou des menus de commande représentées graphiquement, relatifs au système de supervision et de contrôle mis en oeuvre, ce qui a l'avantage d'être rapide, intuitif et ergonomique. En plus de la sélection d'une zone activable via une commande de type pointage (simple clic ou double-clic), réalisable par un seul doigt, il est également possible d'utiliser des commandes à plusieurs doigts, comme par exemple une commande à deux doigts consistant à élargir une zone en partant d'un point central qui est un point de contact, et à écarter les doigts pour obtenir un zoom (« pinch to zoom »).

De préférence, les zones activables sont choisies de taille suffisante pour être sélectionnées en utilisant le doigt.

En variante, des moyens de pointage connus, comme un stylet, sont utilisés pour appliquer des commandes à l'écran tactile.

Le dispositif 2 selon l'invention, tel que représenté schématiquement en figure 2, comporte un premier écran de visualisation 4, un deuxième écran de visualisation et d'interaction 6 qui est un moyen de saisie des commandes par un opérateur. Le dispositif 2 comporte également des moyens électroniques 20 d'acquisition d'informations tactiles multipoints produites par des séquences de commande tactile, une unité centrale de traitement 22, ou CPU, apte à exécuter des instructions logicielles de commande lorsque le dispositif est mis sous tension. Le dispositif 2 comporte également des moyens de stockage d'informations 24, par exemple des registres, aptes à stocker des instructions de code exécutable permettant la mise en oeuvre de traitements logiciels, notamment de données provenant des capteurs, de l'affichage sur lesdits premier et deuxième écran en fonction des commandes tactiles de l'opérateur.

Le dispositif 2 comprend également une interface de communication 26, pour la mise en oeuvre de la connexion à un réseau de communication selon un protocole approprié, permettant ainsi par exemple la transmission de commandes à des ressources distantes, faisant partie du système de supervision et de contrôle selon l'invention.

Les divers éléments du dispositif 2 décrits ci-dessus sont connectés via un bus de communication 28.

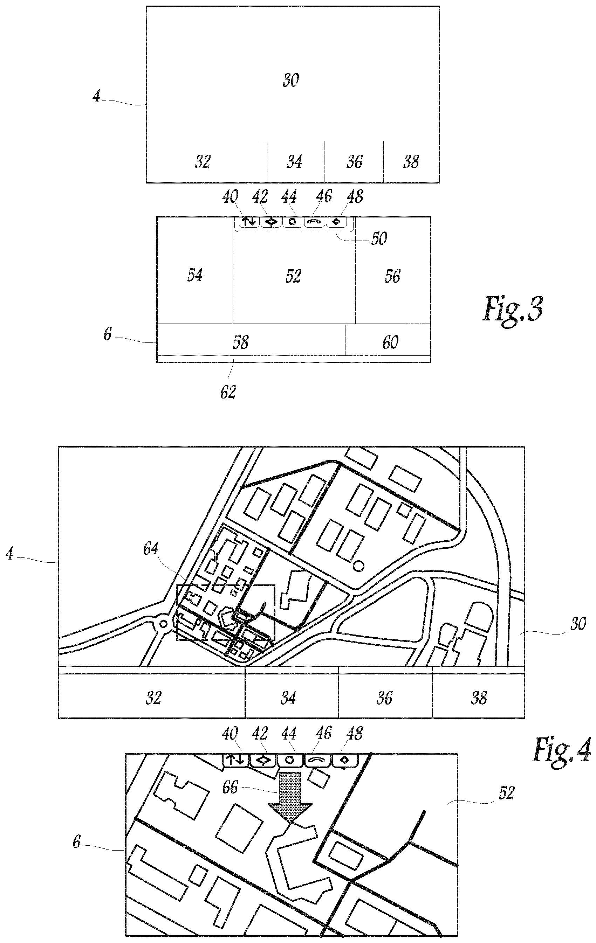

La figure 3 illustre le fonctionnement du dispositif de supervision et de contrôle selon l'invention, via un exemple schématique d'interface graphique de visualisation et de commande présentée à un opérateur.

Dans cet exemple de réalisation, le premier écran de visualisation 4 est divisé en cinq fenêtres, respectivement une fenêtre d'affichage global 30, correspondant à la fenêtre 8 de la figure 1, qui a pour objectif d'afficher une vue générale et synthétique du périmètre à superviser, et quatre fenêtres d'affichage de supervision, 32 à 38. La fenêtre d'affichage global 30 affiche une vue d'ensemble qui est rafraîchie régulièrement à partir d'informations fournies par les capteurs. Dans un mode de réalisation, la vue d'ensemble représente l'ensemble du périmètre à superviser quadrillé en zones.

Par exemple, pour une application de supervision routière, un niveau de charge de trafic est représenté sur la vue d'ensemble, par exemple par des couleurs différenciées entre une zone de trafic fluide et une zone d'embouteillage. Similairement, dans une application de surveillance de sécurité, la vue d'ensemble contient des indications sur l'état normal (ou stable) et l'état d'intrusion (ou d'alarme) des zones surveillées.

Il est également prévu, dans une variante, de représenter sur la vue d'ensemble le positionnement des capteurs et le nombre ou la densité de capteurs par zone de surveillance.

Les fenêtres d'affichage de supervision 32 à 38 ont pour objectif d'afficher diverses informations de supervision synthétiques utiles à l'opérateur.

Dans cet exemple de réalisation, dans le cadre d'un système de supervision, la fenêtre 32 affiche un diagramme d'alarmes, la fenêtre 34 une liste synthétique d'alarmes, la fenêtre 36 une liste synthétique de communications et la fenêtre 38 une liste synthétique d'incidents.

Le nombre d'informations de supervision affiché par fenêtre de supervision est limité de manière à conserver une vision globale. Par exemple, la fenêtre 34 affiche une liste d'alarmes synthétique sous forme de tableau.

Le nombre de fenêtres d'affichage de supervision est variable selon l'application de supervision mise en oeuvre. L'objectif de ces fenêtres est de faciliter le travail de l'opérateur, de lui permettre de réagir très rapidement en cas d'incident tout en diminuant sa charge cognitive. Les fenêtres d'affichage de supervision sont sélectionnées de manière à ne représenter que les principaux axes de supervision, de manière à ne pas surcharger visuellement et cognitivement l'opérateur.

Le premier écran 4 étant simplement un écran de visualisation, le deuxième écran 6 comporte avantageusement des moyens d'affichage, pour chaque fenêtre d'affichage du premier écran 4, d'un objet graphique de liaison associé, de taille réduite par rapport à la fenêtre d'affichage du premier écran. Ainsi, l'objet graphique de liaison 40 est associé à la fenêtre d'affichage global 30, l'objet graphique de liaison 42 est associé à la fenêtre d'affichage de supervision 32 et ainsi de suite. Ces objets graphiques de liaison sont également appelés onglets. Les onglets sont des zones graphiques activables (zones activables 16 décrites en référence à la figure 1) par commande tactile, comme expliqué plus en détail ci-après.

Les onglets 40 à 48 sont disposés de préférence dans un espace de liaison 50, qui est situé à proximité du bord du deuxième écran le plus proche du premier écran. En référence au mode de réalisation illustré à la figure 1, l'espace de liaison 50 est en pratique, dans cet exemple, une barre située en haut du deuxième écran 6, formant ainsi un espace de liaison à la fois physique et de commande entre le premier écran de visualisation 4 et le deuxième écran de visualisation et d'interaction 6.

De manière avantageuse, le positionnement de l'espace de liaison 50 à la charnière physique entre les deux écrans facilite l'action de l'opérateur. Lorsque les deux écrans sont positionnés à proximité spatiale, comme illustré à la figure 1, l'espace de liaison 50 crée une continuité entre les deux écrans, offrant ainsi un espace de travail continu et cohérent à l'opérateur.

Dans une variante, seulement des objets graphiques de liaison 42 à 48 correspondant aux fenêtres d'affichage de contrôle 32 à 38 sont représentés sur le deuxième écran 6.

Le deuxième écran 6 comprend également une fenêtre principale d'affichage et d'interaction 52 (correspondant à la zone 14 de la figure 1), qui sert par exemple à l'affichage d'une vue détaillée d'une des zones du périmètre à superviser visualisé dans la fenêtre d'affichage global 30, sélectionnée par l'opérateur.

L'interface graphique affichée sur le deuxième écran 6 comprend en outre d'autres fenêtres d'affichage et d'interaction, appelées fenêtres d'interaction, dont la taille, le positionnement et la fonction sont variables en fonction de l'application de supervision et de contrôle mise en oeuvre.

Dans l'exemple de réalisation de la figure 3, l'interface graphique du deuxième écran 6 comprend également une fenêtre 54 de navigation dans la vue détaillée affichée dans la fenêtre 52, et un panneau d'affichage de procédure dans la fenêtre 56. Par exemple, la procédure à suivre lors de la prise en charge d'une alarme est affichée dans la fenêtre 56, l'opérateur pouvant obtenir des détails sur une étape de la procédure par sélection tactile de cette étape.

La fenêtre 58 est par exemple une fenêtre d'affichage de l'historique da navigation dans la fenêtre 52, et la fenêtre 60 affiche une carte de navigation en taille réduite, permettant de situer la zone affichée dans la fenêtre 52 par rapport à l'ensemble du périmètre à superviser. Enfin, une barre d'état 62 permettant d'afficher des informations textuelles est rajoutée au bas du deuxième écran 6.

Il est bien entendu que l'ensemble des fenêtres du deuxième écran 6 décrites peuvent être miniaturisées par commande tactile adéquate, ou repliées sur les côtés de l'écran de manière classique. Ainsi, dans un mode d'affichage alternatif, la fenêtre 52 occupe la totalité de l'écran 6, et l'opérateur effectue des déplacements translationnels, des zooms pour obtenir plus de détails ou au contraire des zooms inverses pour avoir une vue plus globale uniquement à partir de séquences de commandes tactiles prédéterminées dans la fenêtre 52.

La possibilité de repositionner et de dimensionner les fenêtres via des commandes tactiles est également offerte à l'opérateur.

De préférence, l'espace de liaison 50 est positionné comme décrit ci-dessus et n'est pas repositionnable par l'opérateur.

Ces commandes tactiles sont de préférence effectuées directement par toucher avec les doigts sans objet de pointage intermédiaire, tel un stylet. Un ou plusieurs doigts sont utilisables pour les commandes. Ainsi, la sélection d'une zone est effectuée par simple ou double toucher avec un seul doigt. Un agrandissement ou zoom-in est effectué, selon un mode de réalisation, par un mouvement d'écartement de deux doigts, les deux doigts étant au départ en contact avec un point de l'écran tactile multipoints qui est le centre de la zone à agrandir. A l'inverse, une diminution de l'échelle de représentation ou zoom-out est effectuée par rapprochement de deux doigts vers un point central.

Les figures 4 à 6 illustrent schématiquement l'utilisation des interfaces graphiques proposées, dans un exemple de gestion d'alarmes par l'opérateur dans le cadre d'un système de supervision.

Il est à noter que ces figures sont schématiques, et en particulier les tailles des écrans et des fenêtres représentées sur les figures ne sont nullement restrictives.

La figure 4 représente les deux écrans de visualisation 4 et 6, avec des interfaces graphiques analogues aux interfaces déjà décrites en référence à la figure 3.

Dans la fenêtre d'affichage global 30 du premier écran 4, une vue d'ensemble du périmètre à superviser est affichée.

La fenêtre d'affichage principale 52 affiche un agrandissement de la zone 64 représentée par un cadre pointillé dans la fenêtre d'affichage global 30.

En effet, pour faciliter l'action de l'opérateur, le dispositif 2 comprend des moyens logiciels de récupérer la zone sélectionnée par l'opérateur dans la fenêtre d'affichage 52 et de la marquer en superposition sur la vue schématique d'ensemble fournie dans la fenêtre d'affichage global 30. L'indication en superposition sur la fenêtre d'affichage est rafraîchie lorsque l'opérateur sélectionne une autre zone (ou un déplacement dans la zone affichée) par commande tactile dans la fenêtre d'affichage 52.

L'ensemble des objets graphiques activables de la zone de liaison 50 sont visibles en permanence, permettant une sélection immédiate par l'opérateur. De préférence, ces objets graphiques de liaison sont visuellement marqués par des symboles de type logo facilement reconnaissables par l'opérateur, comme illustré sur la figure, permettant de lier sémantiquement chaque objet graphique de liaison à la fenêtre d'affichage du premier écran de visualisation associée. Par exemple, les mêmes logos sont représentées dans les fenêtres d'affichage de supervision du premier écran correspondantes.

Dans le mode de réalisation préféré, chaque objet graphique 40 à 48 positionné en haut de l'écran 6, permet par une commande tactile de toucher-glisser vers le bas d'amener la fenêtre d'affichage correspondante du premier écran 4 dans la partie interactive qui est le deuxième écran 6. Cette commande tactile de glissement est représentée symboliquement par la flèche 66 de la figure 4.

De manière plus générale, une commande tactile sur un objet graphique de liaison appliquant un glissement de l'objet graphique vers le bord du deuxième écran qui est situé à l'opposé du bord à proximité duquel est situé l'espace de liaison provoque l'ouverture d'une fenêtre d'interaction correspondante.

En variante, une autre commande tactile, comme par exemple un double clic tactile, est appliquée pour effectuer la sélection correspondant à une fenêtre de visualisation du premier écran vers le deuxième écran interactif tactile.

Une telle sélection permet d'afficher sur le deuxième écran au moins une fenêtre d'interaction correspondant à la fenêtre d'affichage correspondante.

Les fenêtres d'affichage du premier écran 4 ont pour fonction de fournir une vue simplifiée et synthétique du périmètre à superviser et des informations issues des divers capteurs permettant divers contrôles.

Selon l'invention, la sélection d'une des fenêtres d'affichage de supervision 32-38 via l'objet graphique de liaison 42-48 correspondant dans le deuxième écran permet de reprendre et d'enrichir les informations affichées de nouvelles informations et/ou des menus sur lesquels l'opérateur a la capacité d'agir.

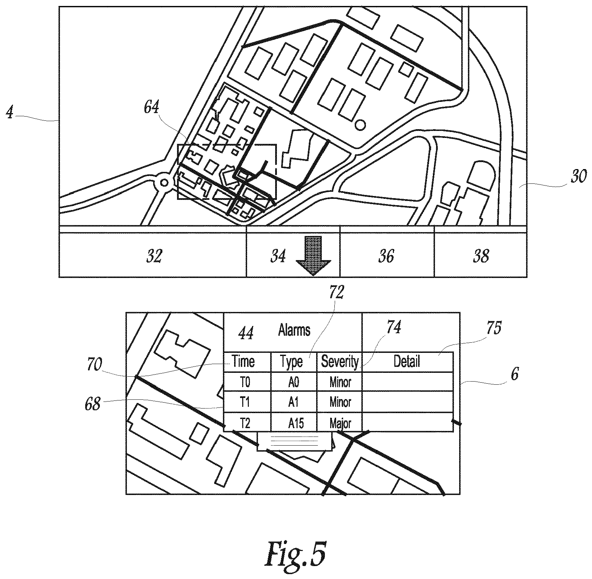

Ainsi, dans l'exemple des figures 4 et 5, l'onglet 44 correspondant à la fenêtre d'affichage de supervision de la liste d'alarmes 34 est sélectionné par l'opérateur.

Comme illustré à la figure 5, la sélection a pour effet dans cet exemple de déployer un tableau 68, qui comprend des informations relatives aux alarmes déjà affichées dans la fenêtre d'affichage de supervision 34 correspondante et des informations supplémentaires, listant de manière détaillée les alarmes survenues récemment, dans un intervalle de temps donné, par exemple dans le dernier quart d'heure, et qui n'ont pas encore été traitées.

Par exemple, l'ensemble d'informations de supervision enrichi est le suivant : l'heure de survenue de l'alarme affichée dans la colonne 70, le type d'alarme, colonne 72, parmi un ensemble de types d'alarmes prédéterminés notés A0 à A15 par exemple, et le niveau de sévérité de l'arme, affiché colonne 74, et le libellé complet de l'alarme avec éventuellement l'état des ressources concernée, affiché dans la colonne « Detail » 75. Typiquement cette colonne 75 est rajoutée par rapport à l'affichage synthétique de la fenêtre d'affichage de supervision 34 correspondante.

Ces informations affichées sont obtenues par traitement des informations fournies par les capteurs, et plus généralement par les équipements du système de supervision. Typiquement, l'heure de survenue d'une alarme est une information fournie directement par les divers capteurs/ressources, et stockée en mémoire du dispositif 2. Les informations de type d'alarme et de sévérité sont obtenues par traitement des informations fournies par les ressources. Ainsi, par exemple, lorsque les capteurs sont des caméras de vidéosurveillance, un logiciel de traitement d'image est par exemple mis en oeuvre en cas de détection d'intrusion, et ce logiciel fournit les informations de type d'alarme et de sévérité de l'alarme.

De préférence, des moyens logiciels de sélection contextuelle d'un sous-ensemble d'informations à afficher pour l'opérateur sont mis en oeuvre, de manière à faciliter le traitement par l'opérateur. Par exemple, en cas de survenue d'une alarme classifiée de sévérité « majeure », plus d'informations relatives à cette alarme majeure sont affichées que d'informations relatives aux alarmes classifiées de sévérité « mineure ».

De même, les menus proposés à l'opérateur suite à une sélection par commande tactile sont sélectionnés de manière contextuelle.

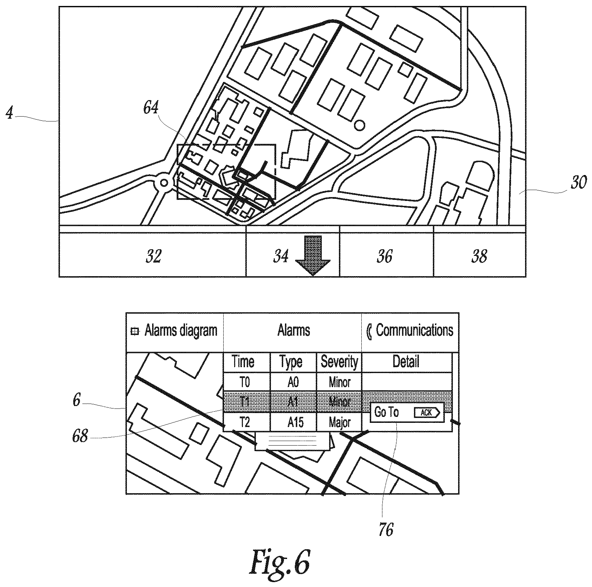

Par exemple, comme illustré à la figure 6, lorsque l'opérateur sélectionne la ligne correspondant à l'alarme classifiée comme « majeure », par une commande tactile de sélection prédéterminée, comme par exemple un simple clic ou un toucher continu par glissement le long de la ligne d'affichage correspondante, un menu 76 « GOTO, ACK » est immédiatement affiché, ce menu permettant à l'opérateur de localiser l'alarme en centrant l'affichage détaillé 52 sur celle-ci (commande « GOTO » sélectionnée) ou de prendre en charge ou « acquitter » (commande « ACK ») l'alarme immédiatement.

De nombreuses variantes à la portée de l'homme du métier sont envisageables, dans le cadre de l'invention visant à traiter les informations et afficher des informations et/ou des menus contextuels, adaptés pour permettre à l'opérateur une prise en charge adéquate selon le niveau d'urgence et de gravité de l'alarme.

De même, une commande tactile prédéterminée de fermeture de l'affichage détaillé et des menus contextuels, éventuellement associée à un endroit prévu à cet effet dans chaque fenêtre d'affichage, permet de revenir à l'affichage de la figure 4, avec des onglets ou objets graphiques de liaison de taille réduite pour chacune des fenêtres d'affichage du premier écran.

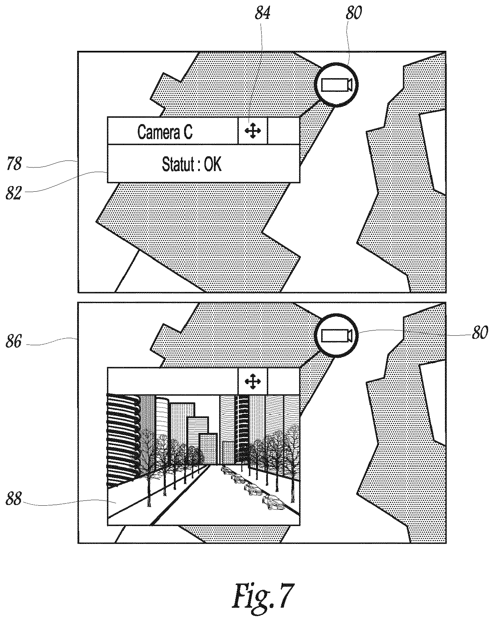

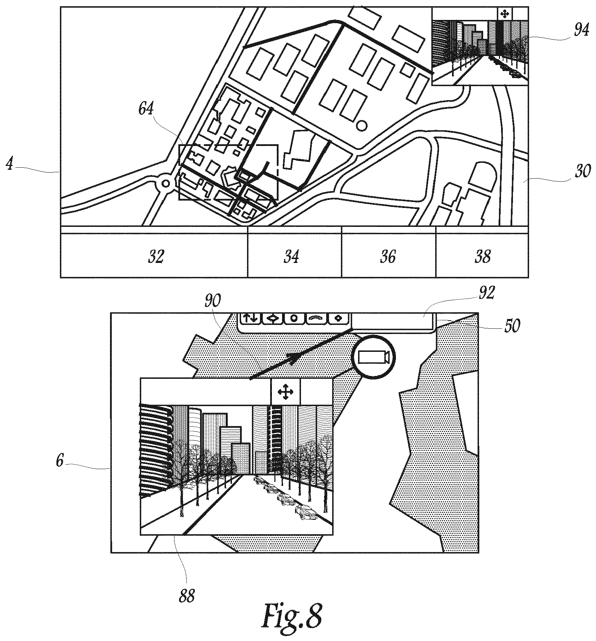

Les figures 7 et 8 illustrent schématiquement d'autres moyens mis en oeuvre dans l'interface graphique du dispositif selon l'invention dans un scénario d'utilisation.

La fenêtre 78 de la figure 7 représente une portion de la fenêtre d'affichage 52 du deuxième écran 6. Un objet graphique 80 est positionné dans la fenêtre 78, indiquant l'emplacement géographique d'un capteur qui est une caméra. Une fenêtre d'affichage synthétique 82, associée au capteur 80, permet d'afficher des informations textuelles, par exemple, le capteur étant une caméra 80, un identifiant unique C de cette caméra C, et le statut, par exemple son état de fonctionnement, qui est « OK ». De plus, un objet graphique 84 permet à l'opérateur de contrôler l'orientation de la caméra à distance, par commande tactile du type toucher/glisser à l'intérieur de cet objet graphique.

De plus, le dispositif comporte des moyens d'accéder à la vidéo prise par la caméra C, via une commande tactile prédéterminée. La fenêtre 86 de la figure 7 représente une portion de la fenêtre d'affichage 52, légèrement agrandie par rapport à la portion 78, illustrant l'affichage fourni à l'opérateur suite à la commande tactile appropriée.

Par exemple un double clic sur la fenêtre d'affichage 82 est récupéré et en réponse, la fenêtre d'affichage 82 est remplacée par une fenêtre d'affichage 88 du signal vidéo temps réel capturé par la caméra C.

L'opérateur a la possibilité de positionner la fenêtre d'affichage 88 à d'autres emplacements spatiaux du deuxième écran 6, par exemple sur un des bords de la fenêtre d'affichage 52, le déplacement de la fenêtre d'affichage s'effectuant par exemple par glissement de la fenêtre vers le point de positionnement prévu.

Alternativement, comme illustré à la figure 8, l'opérateur a également la possibilité de positionner la fenêtre 88 avec l'affichage du signal vidéo capturé par la caméra C dans la fenêtre d'affichage global 30 du premier écran 4.

Afin de réaliser ce positionnement, l'opérateur saisit la fenêtre 88 et la fait glisser par mouvement translationnel représenté schématiquement par la flèche 90 sur la figure vers une barre de transition 92, qui change de représentation graphique - par exemple de couleur, ou par un effet d'ombrage - lorsque la fenêtre 88 la touche. Lorsque l'opérateur lâche la saisie de la fenêtre 88, celle-ci « passe » dans le premier écran 4, à un emplacement prédéterminé, qui est le coin supérieur droit de la fenêtre d'affichage global 30 dans cet exemple. La fenêtre d'affichage 94 correspondante est positionnée à l'emplacement prévu, tandis que la fenêtre 88 disparaît du deuxième écran 6. Comme illustré à la figure 8, la taille d'affichage de la vidéo est adaptée à la fenêtre d'affichage 94 prévue dans le premier écran 4.

Ainsi, l'opérateur a la possibilité de visualiser constamment le signal vidéo saisi par la caméra C, sans que cela empiète sur la fenêtre d'affichage et d'interaction 52. La barre de transition 92 fait partie de l'espace de liaison 50, situé de préférence comme déjà expliqué ci-dessus dans une portion du deuxième écran 6 proche du premier écran 4. Avantageusement, ce positionnement en haut du deuxième écran lorsque les écrans sont positionnés comme décrit en référence à la figure 1, physiquement à la charnière entre les deux écrans, est très ergonomique et cohérent avec la notion de glissement des objets graphiques d'un écran vers l'autre.

Si l'opérateur souhaite modifier l'emplacement de la fenêtre 94 dans la fenêtre d'affichage global 30, ou bien enlever cet affichage, l'opérateur agit sur l'objet graphique de liaison 40 associé à la fenêtre d'affichage global 30, par commande tactile prédéterminée, par exemple par glissement vers le bas comme expliqué ci-dessus en référence à la figure 4. En variante, une autre commande tactile est appliquée.

Une telle commande tactile sur l'objet graphique de liaison 40 a pour effet de ramener dans la fenêtre d'affichage et d'interaction principale 52 une représentation modifiable de la fenêtre d'affichage 30.

L'opérateur a alors la possibilité de déplacer la fenêtre 94 par commande tactile, par exemple par glissement translationnel vers une autre position, ou bien de la fermer, par une commande tactile prédéterminée, comme par exemple un simple toucher (ou simple clic) ou un double-toucher (ou double clic).

Dans un mode réalisation alternatif, un objet graphique de liaison de taille réduite, correspondant à la fenêtre incrustée 94, est crée et affiché au niveau de l'espace de liaison 50. Cet objet graphique est manipulable, comme les autres objets graphiques de l'espace de liaison 50.

Les modes de réalisation décrits brièvement ci-dessus ont été décrits en vue du contrôle et de l'interaction avec une seule caméra.

De manière plus générale, l'invention s'applique avec des systèmes de supervision et de contrôle complexes, dans lesquels de nombreux capteurs et de nombreuses ressources sont mises en oeuvre.

Le dispositif de l'invention et l'interface graphique associée permettent de développer une interface facile d'utilisation et ergonomique avec les capteurs et les équipements disponibles.

## Revendications

1. Dispositif (2) adapté pour la mise en oeuvre d'un système de supervision et de contrôle d'un périmètre, le système comportant une pluralité de capteurs aptes à fournir au dispositif des informations sur ledit périmètre, le dispositif comportant des moyens logiciels de traitement des informations fournies par les capteurs, le dispositif (2) étant **caractérisé en ce qu'**il comporte :
- un premier écran (4) de visualisation adapté pour afficher au moins deux fenêtres d'affichage (30-38) d'informations obtenues à partir d'informations fournies par lesdits capteurs, une desdites fenêtres d'affichage étant une fenêtre d'affichage global (30) d'une vue schématique globale dudit périmètre rafraîchie régulièrement à partir d'informations fournies par lesdits capteurs, et au moins une autre fenêtre d'affichage dudit premier écran étant une fenêtre d'affichage de supervision (32-38) fournissant des informations de supervision obtenues à partir d'au moins un capteur,
- un deuxième écran (6) de visualisation et d'interaction, ledit deuxième écran étant un écran tactile multipoints, adapté pour afficher, pour chaque fenêtre d'affichage (30-38) du premier écran (4), un objet graphique de liaison (40-48) associé,
- des moyens de saisie d'une commande tactile prédéterminée appliquée par un opérateur sur un objet graphique de liaison (40-48) du deuxième écran, et
- des moyens d'affichage, en réponse à ladite commande tactile prédéterminée, sur ledit deuxième écran (6) d'au moins une fenêtre d'interaction (68, 76, 82) correspondant à ladite fenêtre d'affichage (30-38) du premier écran (4) associée audit objet graphique de liaison (40-48), permettant à l'opérateur de commander des traitements logiciels en relation avec ladite fenêtre d'affichage (30-38) du premier écran.

2. Dispositif selon la revendication 1, **caractérisé en ce que** lesdits objets graphiques de liaison (40-48) sont positionnés dans un espace de liaison (50) situé à proximité du bord du deuxième écran (6) le plus proche d'un bord du premier écran (4).

3. Dispositif selon la revendication 2, caractérisé en ce ladite commande tactile prédéterminée est une commande de glissement d'un dit objet graphique de liaison (40-48) vers un bord du deuxième écran (6) qui est situé à l'opposé du bord du deuxième écran à proximité duquel est positionné ledit espace de liaison (50).

4. Dispositif selon l'une des revendications 1 à 3, **caractérisé en ce qu'**il comporte des moyens d'affichage, dans ladite au moins une fenêtre d'interaction (68, 76), lorsque ladite fenêtre d'affichage du premier écran associée est une fenêtre d'affichage de supervision (42-48), d'un ensemble d'informations enrichi par rapport aux informations affichées dans ladite fenêtre d'affichage de supervision (42-48) du premier écran associée.

5. Dispositif selon la revendication 4, **caractérisé en ce que** ledit ensemble d'informations enrichi est un ensemble d'informations contextuel, sélectionné en fonction d'au moins une valeur associée à une information de supervision.

6. Dispositif selon l'une des revendications 4 ou 5, **caractérisé en ce qu'**il comporte des moyens de récupérer une commande tactile prédéterminée effectuée par un opérateur en un point (84) de ladite fenêtre d'interaction et des moyens de commander un ou plusieurs capteurs dudit système de supervision et de contrôle en fonction de ladite commande.

7. Dispositif selon l'une quelconque des revendications précédentes, **caractérisé en ce que** le deuxième écran (6) comporte en outre des moyens d'affichage d'au moins une fenêtre d'affichage et d'interaction (52-62), et des moyens de récupération de commande tactile dans lesdites fenêtres d'affichage et d'interaction, permettant l'affichage détaillé de zones faisant partie dudit périmètre sélectionnées par l'opérateur.

8. Dispositif selon la revendication 7, **caractérisé en ce qu'**il comporte des moyens d'indication (64) en superposition sur ladite fenêtre d'affichage global (30) du premier écran (4) de la zone dans ladite zone d'affichage et d'interaction (52) du deuxième écran.

9. Dispositif selon l'une quelconque des revendications à 8, **caractérisé en ce qu'**il comporte des moyens de récupération d'une commande opérateur consistant à déplacer une fenêtre d'affichage (88) et d'interaction affichée sur le deuxième écran vers ledit espace de liaison (50), et des moyens d'affichage d'une fenêtre d'affichage (94) correspondante à un endroit prédéterminé dudit premier écran (4).

10. Dispositif selon l'une quelconque des revendications précédentes, **caractérisé en ce que** le premier écran (4) est apte à être positionné sensiblement verticalement et le deuxième écran (6) est apte à être positionné sensiblement horizontalement sur un plan de travail de l'opérateur.

## Patentansprüche

1. Vorrichtung (2) für die Umsetzung eines Systems zur Überwachung und Überprüfung eines Gebiets, wobei das System eine Mehrzahl von Sensoren umfasst, die geeignet sind, an die Vorrichtung Informationen über das Gebiet zu liefern, wobei die Vorrichtung Softwaremittel zur Verarbeitung der von den Sensoren gelieferten Informationen aufweist und die Vorrichtung (2) **dadurch gekennzeichnet ist, dass** sie umfasst:
- einen ersten Bildschirm (4) zur Anzeige, der ausgebildet ist, mindestens zwei Anzeigefenster (30 - 38) für Informationen anzuzeigen, die aus den von den Sensoren gelieferten Informationen erhalten werden, wobei eines der Anzeigefenster ein globales Anzeigefenster (30) für eine globale schematische Ansicht des Gebietes ist, die regelmäßig mit den von den Sensoren gelieferten Informationen erneuert wird, und mindestens ein anderes Anzeigefenster des ersten Bildschirms ein Anzeigefenster (32 - 38) für die Überwachung ist, das von mindestens einem Sensor erhaltene Überwachungsinformationen liefert,
- einen zweiten Bildschirm (6) zur Anzeige und Interaktion, wobei der zweite Bildschirm ein Multi-Touch-Screen ist, der ausgebildet ist, für jedes Anzeigefenster (30 - 38) des ersten Bildschirms (4) ein zugeordnetes grafisches Verbindungsobjekt (40 - 48) anzuzeigen,
- Mittel zur Eingabe eines vorbestimmten taktilen Befehls, der von einer Bedienperson auf ein grafisches Verbindungsobjekt (40 - 48) des zweiten Bildschirms aufgebracht wird, und
- Mittel zum Anzeigen mindestens eines Interaktionsfensters (68, 76, 82) auf dem zweiten Bildschirm (6), das mit dem dem grafischen Verbindungsobjekt (40 - 48) zugeordneten Anzeigefenster (30 - 38) des ersten Bildschirms korrespondiert, in Antwort auf den vorbestimmten taktilen Befehl, wodurch die Bedienperson Softwareverarbeitungen in Beziehung mit dem Anzeigefenster (30 - 38) des ersten Bildschirms steuern kann.

2. Vorrichtung nach Anspruch 1, **dadurch gekennzeichnet, dass** die grafischen Verbindungsobjekte (40 - 48) in einem Verbindungsfeld (50) positioniert sind, das in der Nähe des Randes des zweiten Bildschirms (6) liegt, der am nächsten zu einem Rand des ersten Bildschirms (4) vorgesehen ist.

3. Vorrichtung nach Anspruch 2, **dadurch gekennzeichnet, dass** der vorbestimmte taktile Befehl ein Befehl des Verschiebens eines genannten grafischen Verbindungsobjekts (40 - 48) zu einem Rand des zweiten Bildschirms (6) ist, der entgegengesetzt zu dem Rand des zweiten Bildschirms liegt, in dessen Nähe das Verbindungsfeld (50) positioniert ist.

4. Vorrichtung nach einem der Ansprüche 1 bis 3, **dadurch gekennzeichnet, dass** sie in dem mindestens einen Interaktionsfenster (68, 76) Mittel zur Anzeige eines Informationssatzes aufweist, wenn das zugeordnete Anzeigefenster des ersten Bildschirms ein Anzeigefenster (42 - 48) zur Überwachung ist, wobei der Informationssatz in Bezug auf Informationen, die in dem zugeordneten Anzeigefenster (42 - 48) zur Überwachung des ersten Bildschirms angezeigt werden, erweitert ist.

5. Vorrichtung nach Anspruch 4, **dadurch gekennzeichnet, dass** der erweiterte Informationssatz ein kontextbezogener Informationssatz ist, der abhängig von mindestens einem einer Überwachungsinformation zugeordneten Wert ausgewählt wird.

6. Vorrichtung nach einem der Ansprüche 4 oder 5, **dadurch gekennzeichnet, dass** sie Mittel zum Wiederherstellen eines vorbestimmten taktilen Befehls, der von einer Bedienperson an einem Punkt (84) des Interaktionsfensters ausgeführt wird, und Mittel zum Steuern eines oder mehrerer Sensoren des Systems zur Überwachung und Überprüfung abhängig von dem Befehl aufweist.

7. Vorrichtung nach einem beliebigen der vorhergehenden Ansprüche, **dadurch gekennzeichnet, dass** der zweite Bildschirm (6) außerdem Mittel zum Anzeigen mindestens eines Anzeige- und Interaktionsfensters (52 - 62) und Mittel zum Wiederherstellen eines taktilen Befehls in den Anzeige- und Interaktionsfenstern aufweist, wodurch die detaillierte Anzeige von Zonen, die Teil des von der Bedienperson ausgewählten Gebiets sind, ermöglicht wird.

8. Vorrichtung nach Anspruch 7, **dadurch gekennzeichnet, dass** sie ein Hinweismittel (64) in Überlagerung auf dem globalen Anzeigefenster (30) des ersten Bildschirms (4) der Zone in der Anzeige- und Interaktionszone (52) des zweiten Bildschirms aufweist.

9. Vorrichtung nach einem beliebigen der Ansprüche 2 bis 8, **dadurch gekennzeichnet, dass** sie Mittel zum Wiederherstellen eines Befehls einer Bedienperson, die darin bestehen, ein Anzeige-(88) und Interaktionsfenster, das auf dem zweiten Bildschirm angezeigt wird, zu dem Verbindungsfeld (50) zu verschieben, und Mittel zum Anzeigen eines korrespondierenden Anzeigefensters (94) an einer vorbestimmten Stelle des ersten Bildschirms (4) aufweist.

10. Vorrichtung nach einem beliebigen der vorhergehenden Ansprüche, **dadurch gekennzeichnet, dass** der erste Bildschirm (4) geeignet ist, im Wesentlichen vertikal positioniert zu werden und der zweite Bildschirm (6) geeignet ist, im Wesentlichen horizontal auf einer Arbeitsebene der Bedienperson positioniert zu werden.

## Claims

1. A device (2) suitable for implementing a supervision and monitoring system for a perimeter, the system including a plurality of sensors capable of providing information on said perimeter, the device including software means for processing information provided by the sensors, the device (2) being **characterized in that** it comprises:
- a first viewing screen (4) adapted to displaying at least two information display windows (30-38) for displaying information obtained from information provided by said sensors, one of said display windows is an overall display window (30) with an overall diagrammatic view of said perimeter regularly refreshed from information provided by said sensors, and at least one other display window of said first screen being a supervision display window (32-38) providing supervision information obtained from at least one sensor
- a second viewing and interactive screen (6), said second screen being a multi-touch screen, adapted for displaying, for each display window (30-38) of the first screen (4), an associated graphic link object (40-48),
- means for entering a predetermined touch command applied by an operator on a graphic link object (40-48) of the second screen, and
- means for displaying, in response to said predetermined touch command, on said second screen (6), at least one interaction window (68, 76, 82) corresponding to said display window (30-38) of the first screen (4) associated with said graphic link object (40-48), allowing the operator to command software-based processing in relation to said display window (30-38) of the first screen.

2. The device according to claim 1, **characterized in that** said graphic link objects (40-48) are positioned in a linking space (50) situated near the edge of the second screen (6) closest to an edge of the first screen (4).

3. The device according to claim 2, **characterized in that** said predetermined touch command is a command to slide said graphic link object (40-48) toward an edge of the second screen (6) that is situated opposite the edge of the second screen near which said linking space (50) is situated.

4. The device according to any of claims 1 to 3, **characterized in that** it includes means, in said at least one interaction window (68, 76), when said associated display window of the first screen is a supervision display window (42-48), for displaying enriched information relative to the information displayed in said supervision display window (42-48) of the first associated screen.

5. The device according to claim 4, **characterized in that** said set of enriched information is a set of contextual information, selected based on at least one value associated with a piece of supervision information.

6. The device according to one of claims 4 or 5, **characterized in that** it includes means for recovering a predetermined touch command done by an operator at a point (84) of said interaction window and means for commanding one or more sensors of said supervision and monitoring system based on said command.

7. The device according to any one of the preceding claims, **characterized in that** the second screen (6) further includes means for displaying at least one display and interaction window (52-62), and means for recovering a touch command in said display and interaction windows, allowing the detailed display of zones that are part of the perimeter selected by the operator.

8. The device according to claim 7, **characterized in that** it includes means (64) for indicating, superimposed on said overall display window (30) of the first screen (4), the zone in said display and interaction zone (52) of the second screen.

9. The device according to any one of claims 2 to 8, **characterized in that** it includes means for recovering an operator command consisting of moving a display and interaction window (88) displayed on the second screen toward said linking space (50), and means for displaying a display window (94) corresponding to a predetermined location of said first screen (4).

10. The device according to any one of the preceding claims, **characterized in that** the first screen (4) is capable of being positioned substantially vertically and the second screen (6) is capable of being positioned substantially horizontally on a worktop of the operator.
